Europäisches Patentamt

European Patent Office

Office européen des brevets

(11) Publication number: **0 066 593**
**B1**

(12) EUROPEAN PATENT SPECIFICATION

(45) Date of publication of patent specification: **25.09.85**

(51) Int. Cl.⁴: **B 23 P 15/26, F 28 F 9/04**

(21) Application number: **82900021.5**

(22) Date of filing: **07.12.81**

(86) International application number:
**PCT/DK81/00112**

(87) International publication number:
**WO 82/02015 24.06.82 Gazette 82/16**

(54) A METHOD OF MANUFACTURING A MULTI TUBE HOLDER PLATE ELEMENT E.G. FOR HEAT EXCHANGERS.

(30) Priority: **09.12.80 DK 5236/80**

(43) Date of publication of application:
**15.12.82 Bulletin 82/50**

(45) Publication of the grant of the patent:
**25.09.85 Bulletin 85/39**

(84) Designated Contracting States:
**AT CH DE FR GB LI NL SE**

(56) References cited:
**GB-A-1 151 233**
**GB-A-1 465 732**
**GB-A-1 525 641**
**US-A-3 305 012**

(73) Proprietor: **BRDR. SKOV VENTILATION OG ELEKTRONIK A/S**
**Hedelund 4 Glyngöre**
**DK-7870 Roslev (DK)**

(72) Inventor: **SKOV, Kjeld**
**Ostergaard Hovedgaard**
**Aasted, DK-7870 Roslev (DK)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

Courier Press, Leamington Spa, England.

## Description

The present invention relates to a method of manufacturing a tube plate for heat exchange tubes of a heat exchanger wherein the plate is moulded from plastics material and a plurality of holes are formed in the plate during moulding.

It is well known that a quite effective type of heat exchanger is produceable by mounting a plurality of parallel glass tubes between two opposed holding walls of a heat exchanger chamber, and in that connection it is an almost traditional problem how to work out the holding between the tube ends and the holding walls in or adjacent the respective holes therein. For various reasons it is in practice preferred that the tube ends be held inside the holes, i.e. by the tube ends being received in the holes rather than abutting their edge portions axially. The tube ends should be held in a fully sealed, yet not entirely rigidly manner, due to the fragility of the tubes and the known solutions of this holding problem are rather expensive.

It is the purpose of the invention to provide a holding arrangement which is well suited for the purpose and even cheap and easy to provide in a running production.

The invention is based on a moulding technique, whereby the holder plate is produced by moulding. Thus from GB—A 1,525,641 it is known to mould the heat exchanger plate from a thermosetting material, whereby a plurality of tube receiving holes are formed in the plate during moulding; however, it does not discuss the problem of sealingly gripping tube ends in the holes.

According to the invention the holes in the tube plate as being moulded are formed by means of core stubs comprising annular seat grooves for O-rings which when premounted on the stubs project from the stub surface such that the moulded tube plate when ejected from the mould carries with it the O-rings, which thereafter project inwardly from the inner surfaces of the holes as provided in the tube plate by the stubs.

Since the rings were originally slightly projecting into the seat grooves of the core stubs they will, upon the demoulding, be correspondingly projecting inwardly from the walls of the holes, and when the holes are shaped with a diameter only slightly larger than the tube diameter, then the tubes will be mountable in an ideal manner, namely held sealingly and safely by means of the O-rings, and yet not in any stiff manner.

In the following the invention is described in more detail with reference to the drawing, in which:

Fig. 1 is a perspective view of a corner section of a mould for the production of a holder plate according to the invention,

Fig. 2 is a sectional view thereof, and

Fig. 3 is a corresponding sectional view of a holder plate as produced in the mould.

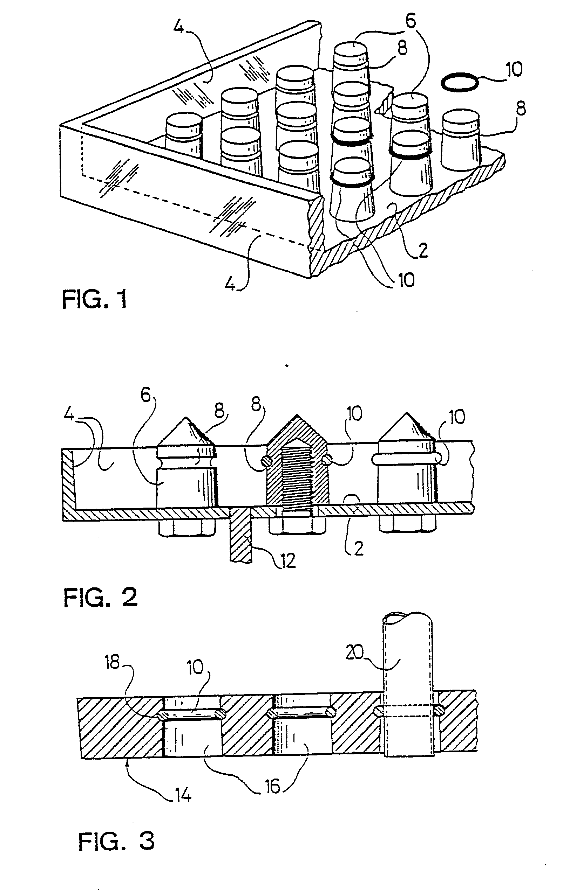

The mould shown in Figs. 1 and 2 has a mould bottom 2 with upright lateral edges 4 and a plurality of core stubs 6, which are conically converging upwardly from the mould bottom 2. Typically the mould may be adapted for the production of holder plates having a surface area of some 50 × 60 cm and having 400—500 holes, i.e. the mould has a corresponding number of core stubs 6 for forming the holes, these being adapted to receive the ends of glass tubes having an exterior diameter of 15 mm. The stubs 6 are provided with annular seat grooves 8 for O-rings 10, and prior to each mould operation an O-ring 10 is placed in the seat groove 8 of each of the stubs 6.

Thereafter a suitable moulding material is poured into the mould, preferably a two component artificial resin compound, if desired with a reinforcing fibre material mixed into the compound or placed in the mould prior to the moulding operation.

When the moulding compound has set the moulded member is caused to be released from the mould by means of suitable ejectors as shown at 12 in Fig. 2, and the moulded and released member 14 will hereby, as shown in Fig. 3, be provided with holes 16 corresponding to the stubs 6, these holes by the very moulding process being shaped with seat grooves 18 for the O-rings 10. It is experienced in practice that the seat grooves 18 by the rejection of the moulded member 14 from the mould will bring along the O-rings 10, i.e. without these remaining on the stubs 6. This effect is presumably due to the fact that the moulded seat grooves 18 for the O-rings will automatically fit completely against the outside of the O-rings, while the ring fit against the bottom of the stub grooves 8 will be less perfect. Besides it will of course be important that the O-rings are sufficiently resilient or compressible to allow for their material to be compressed radially by the rejection of the moulded member 14, since otherwise the O-rings by the said rejection would be influenced by forces seeking to cut them along a diametrical plane as seen in each cross section of the rings. Moreover the cross section of the grooves 8 should be arched along less than 180°, e.g. some 140°, and the grooves should be prepared so as to closely fit the O-rings in order to prevent the moulding material from entering any space between the groove and the ring.

For facilitating the ejection of the moulded member the portions of the stubs 6 which are located above the grooves 8 may be prepared with a conicity smaller than that of the stub portions underneath the grooves.

When the holder plate is moulded from e.g. a glass fibre reinforced artificial resin a certain moulding shrinkage should be aforeseen, and a.o. for this reason it may be preferable that the seat grooves 8 on the stubs 6 exert a slight expanding effect on the O-rings.

As shown in the right hand side of Fig. 3 the moulded member 14 will be immediately ready to receive the ends of tubes 20, with which it is adapted to be used. When the tubes in hundreds are to be mounted between two parallel plate members 14 for use in a heat exchanger housing it will be practical to mount the tubes one by one by pushing them through the respective holes in one of the plate members, because it will be very difficult to mount the other plate member upon all the tubes being premounted as shown in Fig. 3.

## Claims

1. A method of manufacturing a tube plate (14) for heat exchange tubes (20) of a heat exchanger wherein the plate (14) is moulded from plastics material and a plurality of holes (16) are formed in the plate (14) during moulding, characterized in that the holes (16) are formed by means of core stubs (6) comprising annular seat grooves (8) for O-rings (10) which when premounted on the stubs (6) project from the stub surface such that the moulded tube plate (14) when ejected from the mould carries with it the O-rings, which thereafter project inwardly from the inner surfaces of the holes (16) as provided in the tube plate (14) by the stubs (6).

2. A method according to claim 1, characterized in that O-rings are used, which, when premounted on the stubs (6), project from the stub surfaces by more than half their cross section.

## Patentansprüche

1. Verfahren zur Herstellung einer Röhrenplatte (14) für Wärmeaustauscherröhren (20) eines Wärmeaustauschers, bei dem die Platte (14) aus Kunststoffmaterial gegossen wird und eine Vielzahl von Löchern (16) während des Gießens in der Platte (14) geformt werden, dadurch gekennzeichnet, daß die Löcher (16) mit Hilfe von Ständerkernen (6) geformt werden, die ringförmige Vertiefungen für O-Ringe (10) aufweisen, die nach der Vormontage auf den Ständern (6) von der Ständeroberfläche in der Weise abstehen, daß die gegossene Röhrenplatte (14) beim Herausziehen aus der Form die O-Ringe mitnimmt, die danach von der inneren Oberfläche der Löcher (16) nach innen abstehen, wie sie durch die Ständer (6) in der Röhrenplatte erzeugt sind.

2. Verfahren nach Anspruch 1, dadurch gekennzeichnet, daß O-Ringe verwendet werden, die nach der Vormontage auf den Ständern (6) von der Ständeroberfläche mit mehr als deren halben Querschnitt abstehen.

## Revendications

1. Procédé de fabrication d'une plaque porte-tubes (14) pour les tubes (20) échangeurs de chaleur d'un échangeur de chaleur, dans lequel la plaque (14) est en une matière plastique moulée et plusieurs trous (16) y sont formés au moulage, procédé caractérisé en ce que les trous (16) sont formés au moyen de noyaux courts (6) comportant des gorges annulaires (8) de logement de joints toriques (10), lesquels, lorsqu'ils sont montés préalablement sur ces noyaux (6), font saillie de la surface de ces derniers de façon que, quand la plaque porte-tubes (14) est éjectée du moule, elle entraîne avec elles lesdits joints qui font alors saillie, vers l'intérieur, de la surface intérieure des trous (16) ménagés dans cette plaque (14) par les noyaux (6).

2. Procédé selon la revendication 1, caractérisé en ce que l'on utilise des joints toriques qui, lorsqu'ils sont montés préalablement sur les noyaux (6), font saillie de la surface de ces derniers sur plus de la moitié de leur section droite.

FIG. 1

FIG. 2

FIG. 3